# EUROPÄISCHE PATENTANMELDUNG

(11) **EP 4 699 709 A1**
(43) Veröffentlichungstag der Anmeldung: **25.02.2026**
(21) Anmeldenummer: 24195696.0
(22) Anmeldetag: 21.08.2024
(51) Int. Cl.: B06B 1/02, G01S 7/524, G01S 15/931

(54) **VORRICHTUNG ZUR ANSTEUERUNG EINES ULTRASCHALL-TRANSDUCERS ZUR ERZEUGUNG VON ULTRASCHALLWELLEN**

(71) Anmelder: Elmos Semiconductor SE, 51379 Leverkusen (DE)
(72) Erfinder: Kreiß, Dennis, 30559 Hannover (DE); Schmidt, André, 51674 Wiehl (DE); Heppekausen, Stefanie, 45239 Essen (DE); Spiegel, Egbert, 45770 Marl (DE)
(74) Vertreter: dompatent

(57) **Zusammenfassung**

Die Vorrichtung zur Ansteuerung eines Ultraschall-Transducers (12) zur Erzeugung von Ultraschallwellen weist einen ersten und einen zweiten Low-Side-Halbleiterschalter (32, 34) auf, von denen jeder mit einem wahlweise leitend oder sperrend schaltbaren Strompfad versehen ist, fernere ist die Vorrichtung versehen mit einem ersten und einem zweiten High-Side-Halbleiterschalter (36, 38), von denen jeder einen wahlweise leitend oder sperrend schaltbaren Strompfad aufweist. Die Strompfade der ersten Low-Side-Halbleiterschalter (32) und ersten High-Side-Halbleiterschalter (36) sind untereinander verbunden. Ebenso sind die Strompfade des zweiten Low-Side-Halbleiterschalters (34) und des zweiten High-Side-Halbleiterschalters (38) miteinander verbunden. Eine Schaltersteuereinheit (30) dient zum alternierenden Leitend- und Sperrendschalten der vorgenannten Halbleiterschalter (32, 34, 36, 38).

## Beschreibung

Die Erfindung betrifft eine Vorrichtung zur Ansteuerung eines Ultraschall-Transducers zur Erzeugung von Ultraschallwellen.

Derartige Ultraschall-Transducer werden beispielsweise zur Überwachung des Umfeldes eines Fahrzeugs eingesetzt. Dazu sind typischerweise mehrere Ultraschall-Transducer über einen Kommunikationsbus mit einer zentralen Steuereinheit verbunden, die neben der Ansteuerung der Ultraschall-Transducer bzw. der Steuerung von deren Ansteuervorrichtungen auch die von den Ultraschall-Transducern empfangenen Ultraschallsignale auswertet, wobei typischerweise jeder Ultraschall-Transducer mit Hilfe einer ihm zugeordneten Elektronik für eine Vorverarbeitung der empfangenen Ultraschallsignale sorgt. Insoweit ist also der Ultraschall-Transducer sozusagen Teil eines Ultraschall-Sensors, der neben der Ansteuervorrichtung auch Schaltungskomponenten für die Vorverarbeitung und ggf. auch teilweise Auswertung der elektroakustischen Signale sorgt. Auch können diese Sensoren Selbsttests o. dgl. Selbstdiagnosen durchführen.

Um mittels eines Ultraschall-Transducers Ultraschall-Wellen mit dem für die Überwachung des Umfeldes beispielsweise eines Fahrzeugs erforderlichen Schalldruck zu erzeugen, bedarf es einer üblicherweise nicht unbeträchtlichen Energie und Leistung bei der Ansteuerung des Ultraschall-Transducers. Daher werden die Ultraschall-Transducer über Transformatoren angesteuert. Dies hat unter anderem den Vorteil, dass die Spannungsfähigkeit der Bauteile integrierter Schaltungen, wie Sie typischerweise für Ultraschall-Sensoren eingesetzt werden, nur vergleichsweise gering sein muss, da über den Transformator die Spannung für den Ultraschall-Transducer hochtransformiert wird.

Im Stand der Technik ist es bekannt, die primärseitige Spule eines Transformators für die Ansteuerung eines Ultraschall-Transducers über jeweils einen von zwei Halbleiterschaltern (z.B. Transistoren) alternierend und wechselweise mit einem gemeinsamen Potential bzw. mit einer Stromquelle zu verbinden. Die Ansteuerung der Strompfade dieser beiden Halbleiterschalter erfolgt über eine Ansteuereinheit, und zwar gegensinnig und wechselweise. Die primärseitige Spule verfügt ferner über eine Mittenanzapfung, die mit einem Versorgungspotential verbunden ist. Durch die wechselweise gegensinnige Ansteuerung der beiden Halbleiterschalter kommt es nun in der primärseitigen Spule zu einem abwechselnd seine Richtung ändernden Strom, der jeweils die primärseitige Spule zwischen einem der primärseitigen Anschlüsse und der Mittenanzapfung durchfließt. Durch ein entsprechend gewähltes Übertragungsverhältnis des Transformators ergibt sich dann an dessen sekundärseitigen Anschlüssen die erforderlich Wechsel-Ansteuerspannung für den Ultraschall-Transducer (siehe z.B. EP-A-2 189 808).

Der Aufbau des Transformators mit primärseitiger Mittenanzapfung ist mit einem gewissen Aufwand verbunden, da zwei Wicklungen (Spulen) erforderlich sind, deren Verbindung untereinander als Mittenanzapfung herausgeführt werden muss. Außerdem erfordert die Mittenanzapfung einen zusätzlichen Anschluss am IC. Das alles erhöht die Herstellung- und/oder Montagekosten des Ultraschall-Sensors.

Aufgabe der Erfindung ist es, insoweit Abhilfe zu schaffen und einen vereinfachten Aufbau und Anschluss für einen Ultraschall-Transducer zu schaffen.

Zur Lösung dieser Aufgabe wird mit der Erfindung eine Vorrichtung zur Ansteuerung eines Ultraschall-Transducers zur Erzeugung von Ultraschallwellen vorgeschlagen, die versehen ist mit
- einem Transformator, der einen ersten und einen zweiten primärseitigen Anschluss (mit einer primärseitigen Spule zwischen diesen Anschlüssen) und zwei sekundärseitige Anschlüsse (mit einer sekundärseitigen Spule dazwischen) aufweist, mit denen ein Ultraschall-Transducer verbindbar ist,
- einem ersten und einem zweiten Low-Side-Halbleiterschalter, von denen jeder einen wahlweise leitend oder sperrend schaltbaren Strompfad aufweist,
- wobei der Strompfad des ersten Low-Side-Halbleiterschalters zwischen einem der beiden Low-Side-Halbleiterschaltern gemeinsamen ersten Schaltungsknoten und dem ersten primärseitigen Anschluss des Transformators und der Strompfad des zweiten Low-Side-Halbleiterschalters zwischen dem ersten Schaltungsknoten und dem zweiten primärseitigen Anschluss des Transformators angeordnet ist,
- einem ersten und einem zweiten High-Side-Halbleiterschalter, von denen jeder einen wahlweise leitend oder sperrend schaltbaren Strompfad aufweist,
- wobei der Strompfad des ersten High-Side-Halbleiterschalters zwischen einem der beiden High-Side-Halbleiterschaltern gemeinsamen zweiten Schaltungsknoten und dem ersten primärseitigen Anschluss des Transformators und der Strompfad des zweiten High-Side-Halbleiterschalters zwischen dem zweiten Schaltungsknoten und dem zweiten primärseitigen Anschluss des Transformators angeordnet ist,
- wobei an die beiden Schaltungsknoten eine Energiequelle mit zwei Anschlüssen direkt oder indirekt anschließbar ist, und
- einer Schaltersteuereinheit zum alternierenden Leitend- und Sperrendschalten der High-Side-Halbleiterschalter und der Low-Side-Halbleiterschalter,
- wobei die Schaltersteuereinheit in einer Ansteuerphase eines Ansteuerzyklus den ersten High-Side-Halbleiterschalter sowie den zweiten Low-Side-Halbleiterschalter leitend und den zweiten High-Side-Halbleiterschalter sowie den ersten Low-Side-Halbleiterschalter sperrend schaltet und in einer anderen Ansteuerphase des Ansteuerzyklus den zweiten High-Side-Halbleiterschalter sowie den ersten Low-Side-Halbleiterschalter leitend und den ersten High-Side-Halbleiterschalter sowie den zweiten Low-Side-Halbleiterschalter sperrend schaltet, womit durch die primärseitigen Anschlüsse des Transformators und damit durch dessen primärseitige Spule wechselweise Strom in entgegengesetzten Richtungen fließt.

Ausgangspunkt für den erfindungsgemäßen Ansatz einer Verbesserung der Ansteuerung eines Ultraschall-Transducers durch Vereinfachung der Konstruktion des Transformators ist die an sich bekannte Verbindung der beiden primärseitigen Anschlüsse des Transformators mit jeweils einem im folgenden Low-Side-Halbleiterschalter genannten Halbleiterschalter, deren Strompfade ausgehend von einem gemeinsamen ersten Schaltungsknoten zur den beiden primärseitigen Anschlüssen führen. Mit den beiden primärseitigen Anschlüssen des Transformators sind erfindungsgemäß ferner zwei High-Side-Halbleiterschalter verbunden, deren Strompfade ausgehend von den beiden primärseitigen Anschlüssen des Transformators zu einem gemeinsamen zweiten Schaltungsknoten führen. Die Strompfade sämtlicher Halbleiterschalter, bei denen es sich typischerweise um Transistoren handelt, lassen sich nun wechselweise leitend und sperrend schalten, womit durch die primärseitigen Anschlüsse des Transformators und damit durch dessen primärseitige Spule, die zwischen den beiden Reihenschaltungen aus jeweils einem Low-Side-Halbleiterschalter und einem High-Side-Halbleiterschalter angeordnet ist, wechselweise Strom in entgegengesetzten Richtungen fließt.

Von den beiden parallel geschalteten Reihenschaltungen aus jeweils zwei Halbleiterschaltern weist die erste Reihenschaltung die Strompfade des ersten Low-Side-Halbleiterschalters und des ersten High-Side-Halbleiterschalters auf, während die zweite Reihenschaltung die Strompfade des zweiten Low-Side-Halbleiterschalters und des zweiten High-Side-Halbleiterschalters aufweist. Die primärseitigen Anschlüsse des Transformators sind mit den jeweiligen Verbindungsknoten zwischen den beiden Halbleiterschalter-Strompfaden jeder Reihenschaltung verbunden. Die Ansteuerung der Strompfade der vier Halbleiterschalter erfolgt nun dergestalt, dass die Schaltersteuereinheit in einer Ansteuerphase eines Ansteuerzyklus den ersten High-Side-Halbleiterschalter sowie den zweiten Low-Side-Halbleiterschalter leitend und den zweiten High-Side-Halbleiterschalter sowie den ersten Low-Side-Halbleiterschalter sperrend schaltet und in einer anderen Ansteuerphase des Ansteuerzyklus den zweiten High-Side-Halbleiterschalter sowie den ersten Low-Side-Halbleiterschalter leitend und den ersten High-Side-Halbleiterschalter sowie den zweiten Low-Side-Halbleiterschalter sperrend schaltet, womit durch die primärseitigen Anschlüsse des Transformators und damit durch dessen primärseitige Spule wechselweise Strom in entgegengesetzten Richtungen fließt.

Ein wesentlicher Vorteil der Erfindung ist darin zu sehen, dass der Aufbau des Transformators vereinfacht ist, indem auf die Mittenanzapfung der primärseitigen Spule verzichtet werden kann und damit primärseitig nur noch eine (einzige) Wicklung bzw. Spule erforderlich ist. Weiterhin lässt sich ein Anschluss am IC einsparen.

In vorteilhafter Ausgestaltung der Erfindung weist die Vorrichtung ferner eine Stromquelle zur Einstellung des über die Strompfade der High-Side-Halbleiterschalter und der Low-Side-Halbleiterschalter in deren jeweiligen Leitendzustände auf, wobei die Stromquelle zwischen dem ersten Schaltungsknoten und dem einen Anschluss der Energiequelle oder zwischen dem zweiten Schaltungsknoten und dem anderen Anschluss der Energiequelle angeordnet ist. Mit der Stromquelle lässt sich nun der Strom, der über die Strompfade der Halbleiterschalter fließt, einstellen. Dies ist insbesondere von Vorteil, wenn, was typischerweise der Fall ist, für die Überwachung des Umfeldes eines Fahrzeugs mehrere Ultraschall-Transducer eingesetzt werden. Aufgrund von Herstellungstoleranzen sowohl der Ultraschall-Transducer als auch der Transformatoren ist nicht zwangsläufig sichergestellt, dass sämtliche Transducer, wenn sie an das Bordnetz angeschlossen und betrieben werden, Ultraschallwellen mit gleichem Schalldruck aussenden. Das aber ist von Vorteil, wenn es um die zuverlässige Überwachung des Umfeldes des Fahrzeugs geht. Daher kann nun durch Einstellung der Stromquelle jeder Ultraschall-Transducer derart angesteuert werden, dass sämtliche Ultraschall-Transducer Schallwellen mit dem im Wesentlichen gleichen Schalldruck abstrahlen.

Die insoweit mit Vorteil verwendete Stromquelle pro Ultraschall-Transducer kann nun entweder mit den High-Side-Halbleiterschaltern (sogenannte High-Side-Stromquelle) oder mit den Strompfaden der Low-Side-Halbleiterschalter (sogenannte Low-Side-Stromquelle) verbunden sein. In beiden Fällen ist also die Stromquelle mit einem der beiden Schaltungsknoten verbunden, während der andere Schaltungsknoten im Falle des Einsatzes der Stromquelle als High-Side-Stromquelle mit beispielsweise Massepotential verbunden ist und im anderen Falle, in dem die Stromquelle als Low-Side-Stromquelle eingesetzt wird, mit dem Versorgungspotential des Bordnetzes verbunden ist.

Durch die erfindungsgemäße Ansteuerung der Primärseite des Transformators kommt es in Kombination mit einer höheren Versorgungspannung dieser Ansteuerung im Vergleich zu Transformatoren mit primärseitiger Mittenanzapfung zu einer Verkleinerung/Halbierung des Stroms, womit die verwendeten Halbleiterschalter deutlich kleiner ausgelegt werden müssen und damit auch eine geringere Chipfläche benötigen. Außerdem kann der Platz für den Hochvolt-IC-Pin der Mittenanzapfung eingespart werden. Schließlich vereinfacht sich auch die Diagnose der Ansteuereinheit. Was die Vereinfachung des Transformators betrifft, so kann erfindungsgemäß auf zwei primärseitige Wicklungen/Spulen verzichtet werden und stattdessen eine einzige Spule eingesetzt werden.

Für den Zulieferer des OEMs, der diesen mit den Ultraschall-Sensoren bzw. den einzelnen Sensormodulen beliefert, ergeben sich weitere Vorteile, in denen beispielsweise auf dem PCB ein einfacheres Routing möglich ist, da nur noch zwei Leitungen vom IC zum Transformator geführt werden müssen (während es bei der Mittenanzapfung der bisher eingesetzten Transformatoren drei Leitungen sind). Die bereits oben angesprochene Halbierung des Stroms bedeutet darüber hinaus geringere ohmsche Verluste, so dass weniger Verlustleistung entsteht und der Transformator effizienter betrieben werden kann. Wenn man sich vor Augen führt, dass aktuell eingesetzte Transformatoren bei höheren Strömen (ca. 500 mA) bereits in ihre induktive Sättigung gelangen, bieten sich für den Zulieferer aufgrund der Halbierung des Stroms auch deutlich mehr Reserven. Die Halbierung des Stroms führt darüber hinaus auf den Zuleitungen zu einer verringerten EMC-Abstrahlung.

Der Zulieferer kann aber die erfindungsgemäße Ansteuerung auch ohne konstruktive Änderung seiner bisher verwendeten Transformatoren einsetzen. Er verzichtet zu diesem Zweck auf die Verbindung der Mittenanzapfung mit der Ansteuerung und schließt die beiden "äußeren" primärseitigen Anschlüsse an die Ansteuereinheit an. Diese Vorgehensweise gilt insbesondere dann, wenn das halbe Übersetzungsverhältnis also z.B. 1:5 anstelle 1:10 verwendet werden soll. Der Zulieferer hat aber auch die Möglichkeit, einen optimierten Transformator einzusetzen, der ohne Mittenanzapfung auf der Primärseite auskommt. Das vergünstigt die Kosten für die Herstellung des Transformators.

Insoweit wird zur Lösung der obigen Aufgabe erfindungsgemäß alternativ vorgeschlagen, dass die Ansteuerungsvorrichtung versehen ist mit
- einem ersten und einem zweiten Low-Side-Halbleiterschalter, von denen jeder einen wahlweise leitend oder sperrend schaltbaren Strompfad aufweist,
- wobei der Strompfad des ersten Low-Side-Halbleiterschalters zwischen einem der beiden Low-Side-Halbleiterschaltern gemeinsamen ersten Schaltungsknoten und einem ersten Ausgangsanschluss, der mit einem ersten primärseitigen Anschluss eines mit dem Ultraschall-Transducer verbundenen Transformators verbindbar ist, und der Strompfad des zweiten Low-Side-Halbleiterschalters zwischen dem ersten Schaltungsknoten und einem zweiten Ausgangsanschluss angeordnet ist, der mit einem zweiten primärseitigen Anschluss des besagten Transformators verbindbar ist,
- einem ersten und einem zweiten High-Side-Halbleiterschalter, von denen jeder einen wahlweise leitend oder sperrend schaltbaren Strompfad aufweist,
- wobei der Strompfad des ersten High-Side-Halbleiterschalters zwischen einem der beiden High-Side-Halbleiterschaltern gemeinsamen zweiten Schaltungsknoten und dem ersten Ausgangsanschluss und der Strompfad des zweiten High-Side-Halbleiterschalters zwischen dem zweiten Schaltungsknoten und dem zweiten Ausgangsanschluss angeordnet ist,
- wobei an die beiden Schaltungsknoten eine Energiequelle mit zwei Anschlüssen direkt oder indirekt anschließbar ist, und
- einer Schaltersteuereinheit zum alternierenden Leitend- und Sperrendschalten der High-Side-Halbleiterschalter und der Low-Side-Halbleiterschalter,
- wobei die Schaltersteuereinheit in einer Ansteuerphase eines Ansteuerzyklus den ersten High-Side-Halbleiterschalter sowie den zweiten Low-Side-Halbleiterschalter leitend und den zweiten High-Side-Halbleiterschalter sowie den ersten Low-Side-Halbleiterschalter sperrend schaltet und in einer anderen Ansteuerphase des Ansteuerzyklus den zweiten High-Side-Halbleiterschalter sowie den ersten Low-Side-Halbleiterschalter leitend und den ersten High-Side-Halbleiterschalter sowie den zweiten Low-Side-Halbleiterschalter sperrend schaltet.

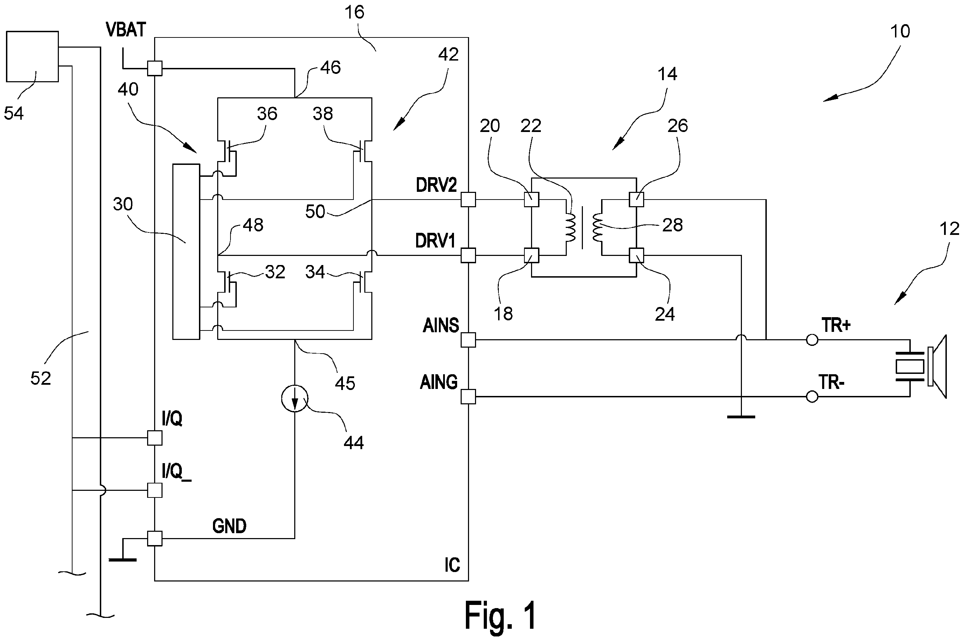

In der Zeichnung (Fig. 1) ist ein Ausführungsbeispiel der Erfindung wiedergegeben. Zu sehen ist schematisch der Gesamtaufbau eines Ultraschall-Sensors 10, der einen Ultraschall-Transducer 12, einen den Ultraschall-Transducer 12 mit Energie versorgenden Transformator 14 und eine als IC ausgebildete Ansteuereinheit 16 aufweist.

Der Transformator 14 weist einen ersten primärseitigen Anschluss 18 und einen zweiten primärseitigen Anschluss 20 mit einer primärseitigen Spule bzw. Wicklung 22 zwischen diesen beiden Anschlüssen auf. Sekundärseitig weist der Transformator 14 einen ersten Anschluss 24 sowie einen zweiten Anschluss 26 mit einer sekundärseitigen Spule bzw. Wicklung 28 zwischen beiden auf. Die beiden sekundärseitigen Anschlüsse 24, 26 sind mit den Anschlüssen TR- und TR+ des Ultraschall-Transducers 12 verbunden.

Teil der Ansteuereinheit 16 ist eine Schaltersteuereinheit 30 für das Leitend- und Sperrendschalten von insgesamt vier Halbleiterschaltern. Dabei sind der Strompfad eines ersten Low-Side-Halbleiterschalters 32 mit der Strompfad eines ersten High-Side-Halbleiterschalters 36 zu einer ersten Reihenschaltung 40 verbunden, während der Strompfad eines zweiten Low-Side-Halbleiterschalters 34 mit dem Strompfad eines zweiten High-Side-Halbleiterschalters 38 zu einer zweiten Reihenschaltung 42 verbunden ist. Beide Reihenschaltungen sind zwischen einem Versorgungspotential VBAT und in diesem Ausführungsbeispiel einer Stromquelle 44 geschaltet, die ihrerseits mit einem zweiten Spannungspotential GND verbunden ist. Die beiden Low-Side-Halbleiterschalter 32 und 34 sind somit mit einem ersten Schaltungsknoten 45 und die beiden High-Side-Halbleiterschalter 36, 38 sind insoweit mit einem zweiten Schaltungsknoten 46 verbunden. Der Verbindungsknoten 48 der beiden Halbleiterschalter der ersten Reihenschaltung 40 ist als nach außen geführter Anschluss DRV1 der Ansteuereinheit 16 mit dem ersten primärseitigen Anschluss 18 des Transformators 14 verbunden. In entsprechender Weise ist der Verbindungsknoten 50 der Halbleiterschalter der zweiten Reihenschaltung 42 als nach außen geführter Anschluss DRV2 mit dem zweiten primärseitigen Anschluss 20 des Transformators 14 verbunden.

In der Zeichnung ist ferner zu erkennen, dass die beiden Anschlüsse TR+ und TR- des Ultraschall-Transducers 12 mit zwei Anschlüssen AINS und ANG der Ansteuereinheit 16 verbunden sind. Über diese beiden IC-Anschlüsse gelangt das elektrische Empfangssignal, das der Ultraschall-Transducer als Reaktion auf ein empfangenes Echo erzeugt, zu nicht mehr gezeigten Schaltungskomponenten zwecks Vorverarbeitung des Empfangssignals, welches nach seiner Vorverarbeitung über die weiteren IC-Anschlüsse (z.B. für die Kommunikation und externe Ansteuerung) I/O und I/O_ nach außen geführt wird beispielsweise über einen Kommunikationsbus 52 an eine zentrale Steuer- und Auswerteeinheit 54.

In der Zeichnung nicht dargestellt sind externe und interne Bauelemente, die für eine Entkopplung der Hochvolt-Ansteuersignale für den Ultraschall-Transducer und dessen Niedervolt-Empfangssignale sorgen. Derartige Maßnahmen und Schaltungskomponenten sind im Zusammenhang mit dem Betrieb von Ultraschall-Transducer grundsätzlich bekannt und bedürfen daher hier nicht weiterer Erläuterungen.

Die Erfindung wurde vorstehend zusammen mit dem Transformator als Bestandteil der Ansteuerungsvorrichtung der Ultraschall-Transducers beschrieben. Der Erfindung manifestiert sich aber auch ohne Referenz zum Transformator. Insoweit betrifft die Erfindung also eine Ansteuerungs-vorrichtung eines Ultraschall-Transducers zur Erzeugung von Ultraschall-Wellen, die die besagten vier Halbleiterschalter mit ihrer oben beschriebenen Verschaltung und die Schaltersteuereinheit zum, wie ebenfalls oben beschrieben, alternierenden Leitend- und Sperrendschalten der Halbleiterschalter umfasst.

### Bezugszeichenliste

- 10: Sensor
- 12: Ultraschall-Transducer
- 14: Transformator
- 16: Ansteuereinheit (als IC)
- 18: erster primärseitiger Anschluss
- 20: zweiter primärseitiger Anschluss
- 22: primärseitige Spule bzw. Wicklung
- 24: erster sekundärseitiger Anschluss
- 26: zweiter sekundärseitiger Anschluss
- 28: sekundärseitige Spule bzw. Wicklung
- 30: Schaltersteuereinheit
- 32: erster Low-Side-Halbleiterschalter
- 34: zweiter Low-Side-Halbleiterschalter
- 36: erster High-Side-Halbleiterschalter
- 38: zweiter High-Side-Halbleiterschalter
- 40: Reihenschaltung
- 42: Reihenschaltung
- 44: Stromquelle
- 45: erster Schaltungsknoten
- 46: zweiter Schaltungsknoten
- 48: Verbindungsknoten
- 50: Verbindungsknoten
- 52: Kommunikationsbus
- 54: zentrale Steuer- und Auswerteeinheit
- DRV1: erster Ausgangsanschluss
- DRV2: zweiter Ausgangsanschluss
- AINS: Empfangssignal-Anschluss
- AING: Empfangssignal-Anschluss
- I/O_: Kommunikationsbusanschluss
- I/O: Kommunikationsbusanschluss
- VBAT: Versorgungspotential der Energiequelle
- GND: Massepotential der Energiequelle

## Patentansprüche

1. Vorrichtung zur Ansteuerung eines Ultraschall-Transducers (12) zur Erzeugung von Ultraschallwellen, mit
- einem Transformator (14), der einen ersten und einen zweiten primärseitigen Anschluss (18, 20) und zwei sekundärseitige Anschlüsse (24, 26) aufweist, mit denen ein Ultraschall-Transducer (12) verbindbar ist,
- einem ersten und einem zweiten Low-Side-Halbleiterschalter (32, 34), von denen jeder einen wahlweise leitend oder sperrend schaltbaren Strompfad aufweist,
- wobei der Strompfad des ersten Low-Side-Halbleiterschalters (32) zwischen einem der beiden Low-Side-Halbleiterschaltern (32, 34) gemeinsamen ersten Schaltungsknoten (45) und dem ersten primärseitigen Anschluss (18) des Transformators (14) und der Strompfad des zweiten Low-Side-Halbleiterschalters (34) zwischen dem ersten Schaltungsknoten (45) und dem zweiten primärseitigen Anschluss (20) des Transformators (14) angeordnet ist,
- einem ersten und einem zweiten High-Side-Halbleiterschalter (36, 38), von denen jeder einen wahlweise leitend oder sperrend schaltbaren Strompfad aufweist,
- wobei der Strompfad des ersten High-Side-Halbleiterschalters (36) zwischen einem der beiden High-Side-Halbleiterschaltern (36, 38) gemeinsamen zweiten Schaltungsknoten (46) und dem ersten primärseitigen Anschluss (18) des Transformators (14) und der Strompfad des zweiten High-Side-Halbleiterschalters (38) zwischen dem zweiten Schaltungsknoten (46) und dem zweiten primärseitigen Anschluss (20) des Transformators (14) angeordnet ist,
- wobei an die beiden Schaltungsknoten (45, 46) eine Energiequelle (VBAT, GND) mit zwei Anschlüssen direkt oder indirekt anschließbar ist, und
- einer Schaltersteuereinheit zum alternierenden Leitend- und Sperrendschalten der High-Side-Halbleiterschalter (36, 38) und der Low-Side-Halbleiterschalter (32, 34),
- wobei die Schaltersteuereinheit (30) in einer Ansteuerphase eines Ansteuerzyklus den ersten High-Side-Halbleiterschalter (36) sowie den zweiten Low-Side-Halbleiterschalter (34) leitend und den zweiten High-Side-Halbleiterschalter (38) sowie den ersten Low-Side-Halbleiterschalter (32) sperrend schaltet und in einer anderen Ansteuerphase des Ansteuerzyklus den zweiten High-Side-Halbleiterschalter (38) sowie den ersten Low-Side-Halbleiterschalter (32) leitend und den ersten High-Side-Halbleiterschalter (36) sowie den zweiten Low-Side-Halbleiterschalter (34) sperrend schaltet.

2. Vorrichtung zur Ansteuerung eines Ultraschall-Transducers (12) zur Erzeugung von Ultraschallwellen, mit
- einem ersten und einem zweiten Low-Side-Halbleiterschalter (32, 34), von denen jeder einen wahlweise leitend oder sperrend schaltbaren Strompfad aufweist,
- wobei der Strompfad des ersten Low-Side-Halbleiterschalters (32) zwischen einem der beiden Low-Side-Halbleiterschaltern (32, 34) gemeinsamen ersten Schaltungsknoten (45) und einem ersten Ausgangsanschluss (DVR1), der mit einem ersten primärseitigen Anschluss (18) eines mit dem Ultraschall-Transducer (12) verbundenen Transformators (14) verbindbar ist, und der Strompfad des zweiten Low-Side-Halbleiterschalters (34) zwischen dem ersten Schaltungsknoten (45) und einem zweiten Ausgangsanschluss (DRV2) angeordnet ist, der mit einem zweiten primärseitigen Anschluss (20) des besagten Transformators (14) verbindbar ist,
- einem ersten und einem zweiten High-Side-Halbleiterschalter (36, 38), von denen jeder einen wahlweise leitend oder sperrend schaltbaren Strompfad aufweist,
- wobei der Strompfad des ersten High-Side-Halbleiterschalters (36) zwischen einem der beiden High-Side-Halbleiterschaltern (36, 38) gemeinsamen zweiten Schaltungsknoten (46) und dem ersten Ausgangsanschluss (DRV1) und der Strompfad des zweiten High-Side-Halbleiterschalters (38) zwischen dem zweiten Schaltungsknoten (46) und dem zweiten Ausgangsanschluss (DRV2) angeordnet ist,
- wobei an die beiden Schaltungsknoten (45, 46) eine Energiequelle (VBAT, GND) mit zwei Anschlüssen direkt oder indirekt anschließbar ist, und
- einer Schaltersteuereinheit zum alternierenden Leitend- und Sperrendschalten der High-Side-Halbleiterschalter (36, 38) und der Low-Side-Halbleiterschalter (32, 34),
- wobei die Schaltersteuereinheit (30) in einer Ansteuerphase eines Ansteuerzyklus den ersten High-Side-Halbleiterschalter (36) sowie den zweiten Low-Side-Halbleiterschalter (34) leitend und den zweiten High-Side-Halbleiterschalter (38) sowie den ersten Low-Side-Halbleiterschalter (32) sperrend schaltet und in einer anderen Ansteuerphase des Ansteuerzyklus den zweiten High-Side-Halbleiterschalter (38) sowie den ersten Low-Side-Halbleiterschalter (32) leitend und den ersten High-Side-Halbleiterschalter (36) sowie den zweiten Low-Side-Halbleiterschalter (34) sperrend schaltet.

3. Vorrichtung nach Anspruch 1 oder 2, **gekennzeichnet durch** eine Stromquelle (44) zur Einstellung des über die Strompfade der High-Side-Halbleiterschalter (36, 38) und der Low-Side-Halbleiterschalter (32, 34) in deren jeweiligen Leitendzustände, wobei die Stromquelle (44) zwischen dem ersten Schaltungsknoten (45) und dem einen Anschluss der Energiequelle (VBAT, GND) oder zwischen dem zweiten Schaltungsknoten (46) und dem anderen Anschluss der Energiequelle (VBAT, GND) angeordnet ist.
